# EUROPEAN PATENT APPLICATION

(11) **EP 4 715 671 A1**
(43) Date of publication of application: **25.03.2026**
(21) Application number: 25200123.5
(22) Date of filing: 04.09.2025
(51) Int. Cl.: G06N 3/045, G06N 3/0495, G06N 3/0475

(54) **METHOD OF REDUCING MEMORY USAGE OF LARGE LANGUAGE MODEL AND ELECTRONIC DEVICE FOR PERFORMING THE METHOD**

(30) Priority: 24.09.2024 KR 20240128645; 16.12.2024 KR 20240187218
(71) Applicant: Samsung Electronics Co., Ltd., Suwon-si, Gyeonggi-do 16677 (KR)
(72) Inventor: SHIN, Seungjun, 16678 Suwon-si (KR); OH, Jaehoon, 16678 Suwon-si (KR); OH, Dokwan, 16678 Suwon-si (KR); JANG, Dongwon, 16678 Suwon-si (KR); HAN, Dasol, 16678 Suwon-si (KR)
(74) Representative: Marks & Clerk LLP

(57) **Abstract**

An operating method of an electronic device includes inputting a plurality of tokens into a first language model (LM) trained to omit performing an operation of a first operation block on first tokens of the plurality of tokens, and generating, by the first LM, an output corresponding to the plurality of tokens by performing inference on the plurality of tokens. The generating of the output corresponding to the plurality of tokens includes inputting the plurality of tokens into a target transformer block of the first LM, determining the first tokens at a pruning ratio at which the operation of the first operation block is omitted, based on a similarity of the first tokens, inputting, into the first operation block, second tokens of the plurality of tokens excluding the first tokens, and bypassing the first tokens to a next operation block of the first operation block.

## Description

### BACKGROUND

### 1. Field

The present disclosure relates generally to large language models, and more particularly, to a method of reducing memory usage of a large language model and an electronic device for performing the method.

### 2. Description of the Related Art

A large language model (LLM) may refer to a deep learning-based model trained with relatively large amounts of data. The LLM may specialize in understanding and/or generating text data. The LLM may have stimulated innovation in the field of natural language processing and may be at least one of core techniques that may enable computers to understand and/or process human language. Representative LLMs may include, but not be limited to, generative pre-trained transform (GPT) and bidirectional encoder representations from transformers (BERT).

An LLM may include hundreds of millions to hundreds of billions of parameters. Accordingly, LLM inference may incur a relatively large memory usage. That is, as the size of an LLM increases, the memory usage of the LLM may further increase. Accordingly, LLMs may not be readily trained, and the inference speed of the trained LLMs may decrease.

### SUMMARY

One or more example embodiments may address at least the above problems and/or disadvantages and other disadvantages not described above. Also, the example embodiments may not overcome the disadvantages described above, and an example embodiment may not overcome any of the problems described above.

According to an aspect of the present disclosure, an operating method of an electronic device includes inputting a plurality of tokens into a first language model (LM) trained to omit performing an operation of a first operation block on first tokens of the plurality of tokens, and generating, by the first LM, an output corresponding to the plurality of tokens by performing inference on the plurality of tokens. The generating of the output corresponding to the plurality of tokens includes inputting the plurality of tokens into a target transformer block of the first LM, determining the first tokens at a pruning ratio at which the operation of the first operation block is omitted, based on a similarity of the first tokens, inputting, into the first operation block, second tokens of the plurality of tokens excluding the first tokens, and bypassing the first tokens to a next operation block of the first operation block.

In the context of the invention, "pruning" refers to a technique that is being widely used to improve efficiency and performance in an artificial neural network, more specifically in an LLM. This technique refers to a process of removing unnecessary or less important operations to save storage space, increase operation speed, and decrease the size of a model.

Embodiments of the present invention are based *inter alia* on the insight that computational complexity may be reduced in an LLM, thereby reducing memory usage thereof, thus improving efficiency and performance thereof.

In conventional block pruning methods, such as methods based on pruning a block "en bloc", some transformer blocks of a model are removed all at once to achieve substantial increase of throughput. This conventional approach inevitably faces limitations in performance because it removes a less important block on average without considering situations where an operation of that block could be important for each token. Thus, such a prior art method has the limitation that the characteristics according to each token are not readily reflected.

In other conventional block pruning methods, such as methods for determining to exit after determining each token is sufficiently operated and yielding a final output without operating the next block, unlike methods for passing all blocks, exit is determined after each block is completely operated when confidence about the final output is sufficiently high. This conventional approach inevitably degrades performance because it is intended to decrease calculational amounts by varyingly determining a block, to exit by each token. Thus, such a prior art method has the limitation that, once the current determination is determined to be sufficient, exit is determined without reviewing blocks on the back. For example, it can be shown that removing the blocks on the back through exit substantially deteriorates performance compared to removing the same number of blocks in the middle.

In order to solve the above problems in the prior art, the present invention provides a method which intends to reduce computational complexity by selecting some of the tokens given as an input in a transformer block in an (L)LM. This may reduce memory usage and improve processing speed while maximally maintaining original model performance. The present invention allows the use of an (L)LM that was previously unable to be implemented in a device due to the limited resources of the device and provides improved processing speed. It can provide a high-performance artificial intelligence function in real time without the need of a cloud connection, providing the benefits of improving user experience and enhancing data security and privacy. This method enables efficient inference of an (L)LM and realizes less operating costs in a cloud-based infrastructure and less response time when providing services.

In view of the above, the present invention relates to a method of partially selecting tokens to be operated rather than operating all tokens in each transformer block of an (L)LM without additional training or modules.

In an embodiment of the operating method, the first operation block may include an attention block of the target transformer block, and the determining of the first tokens may include determining the first tokens based on a similarity between the first tokens and an initial token included in the plurality of tokens transmitted to the attention block.

In an embodiment of the operating method, the inputting of the second tokens into the first operation block may include inputting the second tokens determined based on the similarity between the first tokens and the initial token.

In an embodiment of the operating method, the first operation block may include a feed-forward block of the target transformer block, and the determining the first tokens may include determining the first tokens based on a similarity between an input token of a normalization block disposed before the feed-forward block and an output token of the normalization block corresponding to the input token.

In an embodiment of the operating method, the inputting of the second tokens into the first operation block may include inputting the second tokens determined based on the similarity between the input token and the output token into the feed-forward block.

In an embodiment, the operating method may further include determining a similarity between a plurality of reference tokens by inputting the plurality of reference tokens into a second LM including a plurality of transformer blocks, and determining the first LM by selecting the target transformer block from among the plurality of transformer blocks based on the similarity between the plurality of reference tokens.

In an embodiment of the operating method, the determining of the first LM may include inputting the plurality of reference tokens into the second LM, determining the pruning ratio and a target number of transformer blocks from which the operation of the first operation block is omitted based on at least one reference token of the plurality of reference tokens inputted into the first operation block, and determining a number of transformer blocks from among the plurality of transformer blocks as target transformer blocks, based on the similarity between the plurality of reference tokens. The pruning ratio may be a ratio of one or more reference tokens of the plurality of reference tokens from which the operation of the first operation block is omitted. The number of transformer blocks may be equal to the target number of transformer blocks.

In an embodiment of the operating method, the determining of the number of transformer blocks may include determining whether the number of transformer blocks has reached the target number of transformer blocks, and, based on determining that the number of transformer blocks has not reached the target number of transformer blocks, determining an additional target transformer block from among the plurality of transformer blocks. The determining of the additional target transformer block may include determining a transformer block from among remaining transformer blocks of the plurality of transformer blocks having a least impact on an inference performance of the second LM as the additional target transformer block, based on an operation of at least one reference token being omitted at the pruning ratio in the first operation block among the remaining transformer blocks.

In an embodiment, the operating method may further include determining the similarity between the first tokens based on at least one of a cosine similarity, an Euclidean distance, or an inner product.

In an embodiment, the operating method may further include determining the pruning ratio based on a hardware resource of a device configured to execute the first LM.

In an embodiment of the operating method, the generating of the output corresponding to the plurality of tokens further may include determining the first LM based on a second LM, and, based on the first LM including only the target transformer block, processing a first number of tokens of the plurality of tokens greater than a second number of tokens processible at once by the second LM.

In an embodiment, the operating method may further include determining the first LM based on a second LM. The first LM may be used as a draft model of the second LM.

In an embodiment of the operating method, the determining the first tokens may include determining the similarity between the first tokens based on one or more comparison corresponding to the first operation block, and determining the first tokens based on the similarity between the first tokens and the first operation block.

According to an aspect of the present disclosure, an operating method of an electronic device includes inputting a plurality of reference tokens into a first LM including a plurality of transformer blocks, determining a pruning ratio and a target number of transformer blocks from which an operation of a first operation block is omitted with respect to one or more of the plurality of reference tokens provided to the first operation block in the first LM, the pruning ratio being a ratio at which the operation of the first operation block is omitted from among the plurality of reference tokens, determining a number of transformer blocks from among the plurality of transformer blocks as a plurality of target transformer blocks, based on a similarity of the plurality of reference tokens, the number of transformer blocks being equal to the target number of transformer blocks, and determining a second LM including the plurality of target transformer blocks and being trained to omit the operation in the first operation block at the pruning ratio from among the plurality of target transformer blocks.

According to an aspect of the present disclosure, an electronic device includes one or more processors including processing circuitry, and memory storing instructions. The instructions, when executed by the one or more processors individually or collectively, cause the electronic device to input a plurality of tokens into a first LM including a target transformer block configured to omit an operation of a first operation block on first tokens of the plurality of tokens, and generate, using the first LM, an output corresponding to the plurality of tokens by performing inference on the plurality of tokens. The instructions, when executed by the one or more processors individually or collectively, further cause the electronic device, when generating the output corresponding to the plurality of tokens, to input the plurality of tokens into the target transformer block, determine the first tokens at a pruning ratio at which the operation of the first operation block is omitted, based on a similarity of the first tokens, input, into the first operation block, second tokens of the plurality of tokens excluding the first tokens, and bypass the first tokens to the a operation block of the first operation block.

The first operation block of the electronic device may include an attention block of the target transformer block. The instructions, when executed by the one or more processors individually or collectively, may further cause the electronic device to determine the first tokens based on a similarity between the first tokens and an initial token included in the plurality of tokens transmitted to the attention block.

The instructions, when executed by the one or more processors individually or collectively, may further cause the electronic device to input the second tokens determined based on the similarity between the first tokens and the initial token.

The first operation block of the electronic device may include a feed-forward block of the target transformer block. The instructions, when executed by the one or more processors individually or collectively, may further cause the electronic device to determine the first tokens based on a similarity between an input token of a normalization block disposed before the feed-forward block and an output token of the normalization block corresponding to the input token.

The instructions, when executed by the one or more processors individually or collectively, may further cause the electronic device to input the second tokens determined based on the similarity between the input token and the output token into the feed-forward block.

The instructions, when executed by the one or more processors individually or collectively, may further cause the electronic device to determine a similarity between a plurality of reference tokens by inputting the plurality of reference tokens into a second LM including a plurality of transformer blocks, and determine the first LM by selecting the target transformer block from among the plurality of transformer blocks based on the similarity between the plurality of reference tokens.

According to an aspect of the present disclosure, a non-transitory computer-readable storage medium stores computer-executable instructions that, when executed by at least one processor of a device, cause the device to input a plurality of tokens into a first LM including a target transformer block configured to omit an operation of a first operation block on first tokens of the plurality of tokens, and generate, using the first LM, an output corresponding to the plurality of tokens by performing inference on the plurality of tokens. The computer-executable instructions, when executed by the one or more processors individually or collectively, further cause the device, when generating the output corresponding to the plurality of tokens, to input the plurality of tokens into the target transformer block, determine the first tokens at a pruning ratio at which the operation of the first operation block is omitted, based on a similarity of the first tokens, input, into the first operation block, second tokens of the plurality of tokens excluding the first tokens, and bypass the first tokens to the a operation block of the first operation block.

Additional aspects may be set forth in part in the description which follows and, in part, may be apparent from the description, and/or may be learned by practice of the presented embodiments.

### BRIEF DESCRIPTION OF THE DRAWINGS

The above and/or other aspects, features, and advantages of certain embodiments of the present disclosure may be more apparent from the following description taken in conjunction with the accompanying drawings, in which:
FIG. 1 is a diagram illustrating an electronic device, according to an embodiment;
FIG. 2 is a diagram illustrating the architecture of a large language model (LLM), according to an embodiment;
FIG. 3 is a diagram illustrating an attention sync, according to an embodiment;
FIGS. 4 and 5 are diagrams each illustrating the determination of a target transformer block, according to an embodiment;
FIGS. 6 to 8 are diagrams each illustrating the operation of a target transformer block, according to an embodiment;
FIG. 9 is a diagram illustrating context lengthening, according to an embodiment; and
FIGS. 10 and 11 are diagrams each illustrating the operation of an electronic device, according to an embodiment.

### DETAILED DESCRIPTION

The following structural or functional description is provided as an example only and various alterations and modifications may be made to the examples. Here, the embodiments are not construed as limited to the disclosure and may be understood to include all changes, equivalents, and replacements within the idea and the technical scope of the disclosure.

Terms, such as first, second, and the like, may be used herein to describe various components. Each of these terminologies is not used to indicate an essence, order or sequence of a corresponding component but used merely to distinguish the corresponding component from other components. For example, a first component may be referred to as a second component, and similarly the second component may also be referred to as the first component.

It may be noted that if it is described that one component is "connected", "coupled", or "joined" to another component, a third component may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise. It may be further understood that the terms "comprises/including" and/or "includes/including" when used herein, specify the presence of stated features, integers, operations, operations, elements, and/or components, but do not preclude the presence or addition of one or more other features, integers, operations, operations, elements, components and/or groups thereof.

Unless otherwise indicated, all terms, including technical and scientific terms, used herein have the same meaning as commonly understood by one of ordinary skill in the art to which this disclosure pertains. It may be further understood that terms, such as those defined in commonly used dictionaries, may be interpreted as having a meaning that is consistent with their meaning in the context of the relevant art and may not be interpreted in an idealized or overly formal sense unless expressly so indicated herein.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings. When describing the embodiments with reference to the accompanying drawings, like reference numerals may refer to like elements and a repeated description related thereto may be omitted for the sake of brevity.

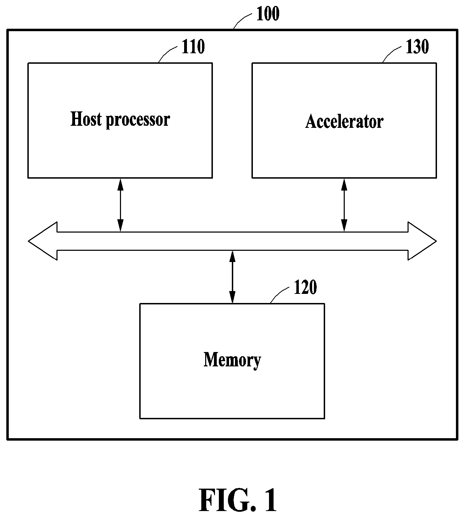

FIG. 1 is a diagram illustrating an electronic device, according to an embodiment.

Referring to FIG. 1, an electronic device 100 may include a host processor 110, a memory 120, and an accelerator 130. The host processor 110, the memory 120, and the accelerator 130 may communicate with one another via a bus, a network on a chip (NoC), or a peripheral component interconnect express (PCIe). Only components related to the embodiments herein are included in the electronic device 100 illustrated in FIG. 1. Thus, the electronic device 100 may also include other general-purpose components in addition to the components illustrated in FIG. 1.

The host processor 110 may perform overall functions for controlling the electronic device 100. The host processor 110 may generally control the electronic device 100 by executing programs and/or instructions stored in the memory 120. The host processor 110 may be implemented as a central processing unit (CPU), a graphics processing unit (GPU), or an application processor (AP), which is included in the electronic device 100. However, the present disclosure is not limited thereto.

The memory 120 may be and/or may include hardware for storing data having been processed or to be processed in the electronic device 100. In addition, the memory 120 may store an application or a driver to be driven by the electronic device 100. The memory 120 may include volatile memory (e.g., dynamic random-access memory (DRAM)) and/or non-volatile memory.

The electronic device 100 may include the accelerator 130 for performing at least one operation. The accelerator 130 may be and/or may include a separate dedicated processor that may more efficiently process an operation, due to the characteristics of the operation, than the general-purpose host processor 110. For example, a large language model (LLM) may be executed in the accelerator 130. That is, one or more processing elements (PEs) included in the accelerator 130 may be used. The accelerator 130 may correspond to, for example, a neural processing unit (NPU), a tensor processing unit (TPU), a digital signal processor (DSP), a GPU, or a neural engine, which may perform an operation according to a neural network. It may be apparent to those skilled in the art that tasks efficiently processed in the accelerator 130 may not necessarily be processed in the accelerator 130 and may also be processed by the host processor 110.

The LLM may refer to a deep learning-based model trained with relatively large amounts of data and/or may refer to a type of neural network. The LLM may specialize in understanding and/or generating text data. The size of the LLM may be relatively large because the LLM may include a relatively large amount of parameters in an attempt to improve performance. For example, the LLM may include at least hundreds of thousands of parameters and, in some embodiments, may include hundreds of billions of parameters. The hardware resources of the electronic device 100 configured to execute the LLM may be critical in executing the LLM because the size of the LLM may be relatively large. For example, the execution (e.g., inference) of the LLM may incur relatively large amounts of memory resources. Accordingly, the inference speed of the LLM may decrease, and/or various problems may occur as the LLM uses up most of the memory resources of the electronic device 100.

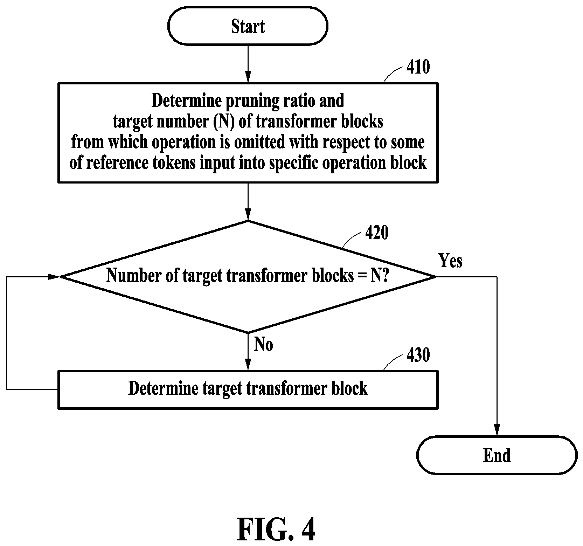

Therefore, a method for reducing memory usage while maintaining the performance of the LLM may be needed. One or more methods, according to the present disclosure, for reducing the memory usage of the LLM are described below with reference to FIG. 4.

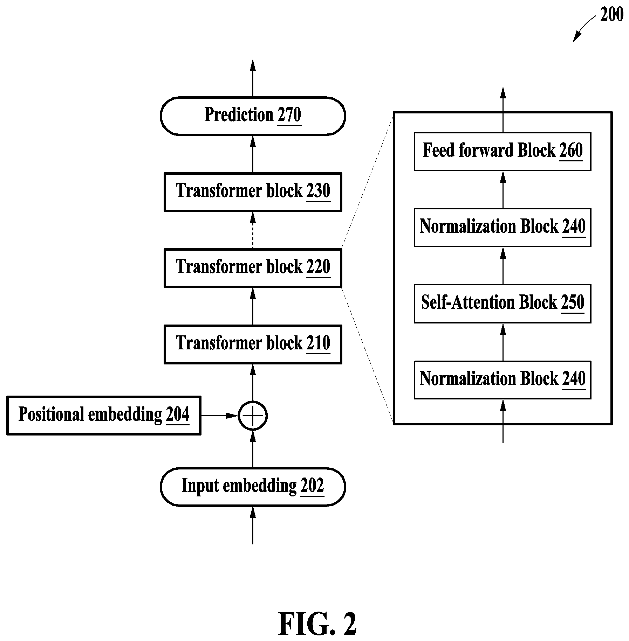

The general architecture of an LLM, according to the present disclosure, is described with reference to FIG. 2.

FIG. 2 is a diagram illustrating the architecture of an LLM, according to an embodiment.

In an LLM 200, input embedding 202 may refer to an operation of transforming a token (e.g., a word) into a vector form in a manner comprehensible by the LLM 200. A transformer block may need position information (e.g., relative sequence information) of tokens to process sequential information. In the LLM 200, positional embedding 204 may refer to an operation of adding position information corresponding to a word (or a token) as a vector. The LLM 200 may include an operation of training the input sequence of words through positional embedding 204.

The LLM 200 may include a plurality of transformer blocks (e.g., a first transformer block 210, a second transformer block 220, and a third transformer block 230). The first transformer block 210 may receive a token on which input embedding 202 and/or positional embedding 204 may have been performed. The plurality of transformer blocks 210 to 230 may be connected in series. For example, a transformer block of the plurality of transformer blocks 210 to 230 may receive an output of a previous transformer block plurality of transformer blocks 210 to 230. However, the present disclosure is not limited thereto, and the plurality of transformer blocks 210 to 230 may be connected using various other connection configurations.

Each of the plurality of transformer blocks 210 to 230 may include a plurality of blocks. For example, the second transformer block 220 may include one or more normalization blocks 240, one or more self-attention blocks 250 (or attention blocks), one or more feed-forward blocks 260, or the like. The present disclosure shows that the second transformer block 220 includes only blocks related to the embodiments herein for ease of description. However, it may be apparent to those skilled in the art that the second transformer block 220 may include various blocks (e.g., a linear block, or the like) in addition to the foregoing blocks.

A plurality of blocks may be variously expressed by terms, such as, but not limited to, networks, operations, and/or layers, depending on cases. For example, a normalization block may be the same and/or refer to the same operation as a normalization network, a normalization operation, or a normalization layer.

The normalization block 240 may normalize an output of the previous block to stabilize training. The self-attention block 250 may identify the relation between input tokens by using an attention mechanism, for example. The feed-forward block 260 may perform an additional non-linear transformation after the attention mechanism is ended.

According to an embodiment, one or more transformer blocks illustrated in FIG. 2 may be referred to as higher transformer blocks. For example, according to embodiments, two or more consecutive transformer blocks illustrated in FIG. 2 may be referred to as one higher transformer block.

In the LLM 200, an output block (e.g., prediction block 270) may generate a final prediction result based on an output of the last transformer block (e.g., the third transformer block 230).

The performance of the LLM 200 may be associated with the number of transformer blocks. As the number of transformer blocks increases, the LLM 200 may perform deeper learning. For example, as the number of transformer blocks increases, the LLM 200 may learn more complex context information and may learn the correlation between tokens spaced farther apart in a long sentence. As the number of transformer blocks increases, the size of the LLM 200 may increase. For example, additional hardware resources of an electronic device 100 may be needed to execute the LLM with the increased size. The increase in hardware resources may refer to an increase in processing throughput, memory footprint, costs, or the like.

Accordingly, a method for reducing the size of an LLM, increasing operation speed, and saving storage space may be needed.

For example, there may be the method of entirely pruning a portion of a plurality of transformer blocks. The method of entirely pruning a portion of the plurality of transformer blocks may be effective in simplifying the complexity of the LLM and saving computational resources, however, the method may undermine the performance of the LLM.

For example, there may be a method of determining to export a sufficiently operated token without inputting this token into a transformer block. The token that may have been determined to be exported may be used for a final output without being input into the transformer block. Using the method of determining to export a token may provide for the token determined to be exported to be not input into a transformer block (e.g., omitted), and thereby, may undermine the performance of the LLM.

For example, there may be a method for optimizing the performance of an LLM by varying a route to pass a transformer block for every token that is input to the LLM. If a route to pass a transformer block is varied for every token that is input to the LLM, a separate router may be trained, and additional training may be needed.

The present disclosure provides for methods of dynamically pruning tokens without separate training to reduce the memory usage of an LLM. The methods provided in the present disclosure for reducing the memory usage of the LLM are described with reference to FIG. 4.

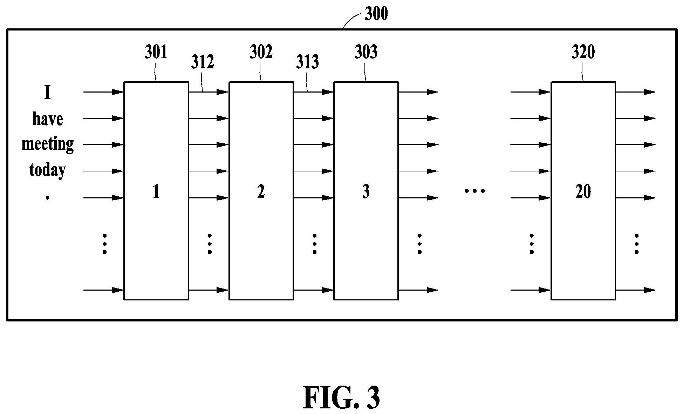

FIG. 3 is a diagram illustrating an attention sync operation, according to an embodiment.

FIG. 3 illustrates an example of an LLM 300 including a plurality of transformer blocks (e.g., a first transformer block 301, a second transformer block 302, a third transformer block 303, to an n-th transformer block 320, where n is a positive integer greater than zero (0)). In the present disclosure, components except for transformer blocks may be omitted from the architecture of the LLM 300 for ease of description. However, it may be apparent to those skilled in the art that the LLM 300 may include other components in addition to the components illustrated in FIG. 3.

The first transformer block 301 may be arranged first in the LLM 300. The first transformer block 301 may receive tokens. In an embodiment, the LLM 300, when receiving a sentence, may divide the sentence into words, partial words, or letters to tokenize the sentence. For example, the LLM 300, when receiving the sentence "I have a meeting today.", may tokenize the sentence into "I", "have", "a meeting", "today", and "." into a plurality of tokens.

The plurality of tokens may be input into the first transformer block 301. The foremost token from among the tokens input into the first transformer block 301 may be referred to as an initial token (e.g., token 1). For example, "I" may be the initial token (e.g., token 1).

Tokens input to the same position in each transformer block in the LLM 300 may be referred to as the same even if including different pieces of information. For example, a token corresponding to an input 312 of the second transformer block 302 and a token corresponding to an input 313 of the third transformer block 303 may both be referred to as token 1 even if including different pieces of information.

The initial token may have a significant impact on the performance of the LLM 300. The phenomenon that the initial token has a significant impact on the performance of the LLM 300 may be referred to as an attention sink phenomenon. The attention sink phenomenon may refer to a phenomenon in which the LLM 300 may focus high attention on the initial token of an input. For example, the LLM 300 may focus high attention on the initial token after several initial transformer blocks. As the LLM 300 focuses high attention on the initial token, regardless of inputs, a value updated by the initial token passing a transformer block may mostly have a substantially similar and/or the same value. For example, regardless of sentences input to the LLM 300, a value updated by the initial token passing a transformer block after several initial transformer blocks may be relatively constant.

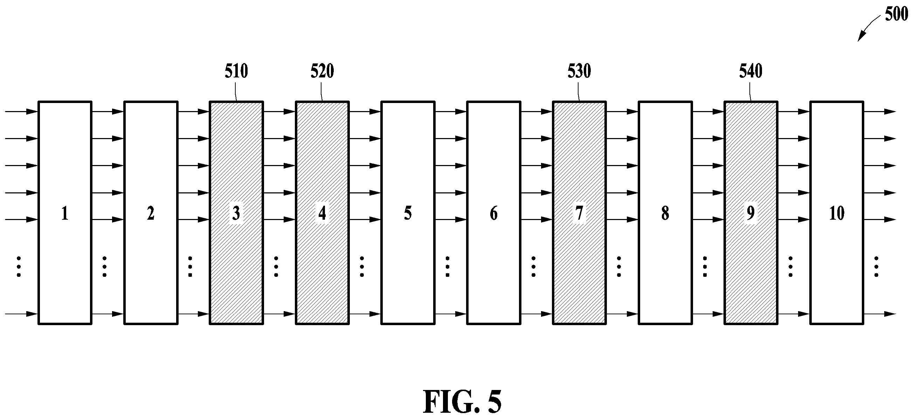

Hereinafter, a method of pruning tokens to reduce the memory usage of an LLM by using the similarity between the initial token and other tokens is described with reference to FIGS. 4 and 5.

FIGS. 4 and 5 are diagrams each illustrating the determination of a target transformer block, according to an embodiment.

An electronic device 100 may determine an LLM with reduced throughput from an original LLM including a plurality of transformer blocks. The LLM with reduced throughput may refer to an LLM derived from the original LLM and may have the same structure as that of the original LLM, however, an operation for some tokens may be omitted in a target transformer block.

Hereinafter, a method of determining a target transformer block to reduce throughput when tokens for inference are input later on by inputting reference tokens into the original LLM is described.

In the following embodiments, operations may be performed sequentially. However, the present disclosure is not limited in this regard. For example, the order of the operations may be changed and at least two of the operations may be performed in parallel. The operations illustrated in FIG. 4 may be performed by at least one component of the electronic device 100. For example, the electronic device 100 may include a memory 120 configured to store instructions. The instructions, when executed individually and/or collectively by at least one processor 110 and/or an accelerator 130, may cause the electronic device 100 to perform the following operations.

In operation 410, the electronic device 100 may determine a pruning ratio and the target number (e.g., N, where N is positive integer greater than zero (0)) of transformer blocks from which an operation may be omitted with respect to one or more of the reference tokens input into a specific operation block.

The reference tokens may be and/or may include data input to determine the target transformer block, such as, but not limited to, a calibration data set. The pruning ratio may refer to a ratio of tokens from which an operation is omitted in the specific operation block from among the input tokens.

The electronic device 100 may determine the pruning ratio and the target number based on a hardware resource of the electronic device 100 configured to execute an LLM. For example, as the hardware resource to execute the LLM decreases, at least one of the pruning ratio and the target number may further increase.

In operation 420, the electronic device 100 may determine whether the number of target transformer blocks reaches the target number (e.g., N).

The electronic device 100 may terminate the operation when the number of target transformer blocks has reached the target number (Yes in operation 420).

The electronic device 100 may perform operation 430 when the number of target transformer blocks does not reach the target number (No in operation 420).

In operation 430, the electronic device 100 may determine a target transformer block.

The electronic device 100 may determine the remaining transformer blocks excluding the target transformer block from among the plurality of transformer blocks of the original LLM. The electronic device 100 may determine a target transformer block from among the remaining transformer blocks. The electronic device 100 may perform operation 420 again after performing operation 430.

The electronic device 100 may omit an operation of the specific operation block from some of the reference tokens by selecting each remaining transformer block one by one from the remaining transformer blocks. For example, some of the reference tokens may be pruned for the specific operation block. The number of some of the reference tokens from which the operation of the specific operation block is omitted may be determined using the pruning ratio for the reference tokens. For example, if the number of reference tokens is 1000, and the pruning ratio is 50%, the number of some of the reference tokens from which the operation of the specific operation block is omitted may be 500.

The electronic device 100 may monitor an impact on the inference performance of the original LLM when an operation of the specific operation block is omitted from some of the reference tokens by selecting each remaining transformer block one by one. The electronic device 100 may determine the remaining transformer block having the least impact on the inference performance of the original LLM to be the target transformer block when an operation of the specific operation block is omitted from some of the reference tokens.

The electronic device 100 may select some reference tokens from which a specific operation is omitted to determine the target transformer block. Hereinafter, a method of selecting some of the reference tokens is described.

According to an embodiment, the specific operation block may include an attention block. The attention block may perform an attention operation. The attention operation may be and/or may include an operation that may spread the information of a token across surrounding tokens, and inputting a better-trained token and/or a token closer to a final result into the attention block may have a more advantageous effect on inference performance. Inputting a less trained token distant from the final result into the attention block may have an adverse effect on the other tokens. An initial token may refer to a token that receives high attention, as described above with reference to FIG. 3, and the similarity between the initial token and the other tokens may increase as the initial token passes the attention block. To omit the attention operation from some of the tokens, omitting the attention operation from tokens having a low similarity with the initial token may have less impact on inference performance.

According to an embodiment, the reference tokens may include an initial reference token. The initial reference token (e.g., the initial token) is described above with reference to FIG. 3, and consequently, repeated descriptions thereof may be omitted for the sake of brevity. The electronic device 100 may determine the similarity between the initial reference token and the reference tokens. The similarity may be determined based on at least one of cosine similarity, Euclidean distance, or inner product. The electronic device 100 may determine reference tokens from which the attention operation is omitted, based on the similarity between the initial reference token and the reference tokens.

According to an embodiment, the electronic device 100 may determine bottom X reference tokens (where X is a positive integer greater than zero (1)) from among the reference tokens, based on the similarity, and may omit the attention operation from the bottom X reference tokens. For example, the electronic device 100 may have the bottom X reference tokens bypass to be transmitted to the next block of the attention block. The bottom X may correspond to the pruning ratio with respect to the number of reference tokens. For example, if the number of reference tokens is 1000, and the pruning ratio is 30%, X may be 300.

However, the method of determining the number of reference tokens from which the attention operation is omitted is just an example, and the present disclosure is not limited thereto. For example, reference tokens having similarity with the initial reference token being less than a threshold value may be determined to be the reference tokens from which the attention operation is omitted.

According to an embodiment, the specific operation block may include a feed-forward block. The feed-forward block may perform a feed-forward operation. An input and output of a normalization block may be used to determine tokens configured to perform the feed-forward operation in the feed-forward block. In an embodiment, the normalization block may perform scaling in addition to simply performing normalization. The normalization block may determine how much the characteristics of a specific token are reflected in the next operation (e.g., the feed-forward operation) through scaling. For example, if the similarity between an input and output of the specific token input into the normalization block is high, the characteristics of the specific token may be more reflected in the next operation. As another example, if the similarity between an input and output of the specific token input into the normalization block is low, the characteristics of the specific token may not be properly reflected in the next operation, and an operation that is not related to the characteristics of the specific token may be performed in the next operation. To omit the feed-forward operation from some of the tokens, omitting the feed-forward operation from tokens having a low similarity between an input token and output token of the normalization operation arranged before the feed-forward block may have less impact on inference performance.

According to an embodiment, the electronic device 100 may determine some of the reference tokens from which the feed-forward operation is omitted by using an input and output of the normalization block arranged before the feed-forward block. The electronic device 100 may determine the similarity between an input of the normalization block and an output corresponding to the input for each of the reference tokens. For example, the electronic device 100 may determine the similarity between an input and output of the normalization block corresponding to reference token 3. The similarity may be determined based on at least one of cosine similarity, Euclidean distance, or inner product. The electronic device 100 may determine the reference tokens from which the feed-forward operation is omitted, based on the similarity between an input of the normalization block and an output corresponding to the input.

According to an embodiment, the electronic device 100 may determine bottom X reference tokens from among the reference tokens, based on the similarity, and may omit the feed-forward operation from the bottom X reference tokens. For example, the electronic device 100 may have the bottom X reference tokens bypass to be transmitted to the next block of the feed-forward block. The bottom X may correspond to the pruning ratio with respect to the number of reference tokens. For example, if the number of reference tokens is 1000, and the pruning ratio is 30%, X may be 300.

The electronic device 100 may monitor an impact on the inference performance of the original LLM when an operation of the specific operation block is omitted from some of the reference tokens selected according to the foregoing method by selecting each remaining transformer block one by one. The electronic device 100 may determine the remaining transformer block having the least impact on the inference performance of the original LLM to be the target transformer block when an operation of the specific operation block is omitted from some of the reference tokens.

The target transformer block determined through the foregoing method may omit an operation at the pruning ratio from among the input tokens for the specific operation block when inputting tokens later. The position of a token to be pruned in the target transformer block is not determined according to the method of determining the target transformer block, and the position of a token to be pruned may be dynamically changed whenever tokens are input.

FIG. 5 illustrates an LLM 500 in which the number of target transformer blocks is determined to be the same as the target number from the original LLM. The LLM 500 may be determined from the original LLM. The LLM 500 may include the same structure as that of the original LLM. For example, the LLM 500 may include the same number of transformer blocks as the original LLM, and some of transformer blocks may be target transformer blocks. For example, the LLM 500 may include a plurality of target transformer blocks (e.g., a first transformer block 510, a second transformer block 520, a third transformer block 530, and a fourth transformer block 540).

The target transformer blocks may omit an operation for the specific operation block from some of the input tokens. For example, the target transformer blocks may omit an operation from some of the input tokens in the attention block and the feed-forward block. The electronic device 100 may determine the LLM 500 with reduced memory usage from the original LLM through similarity determination without separately retraining the original LLM.

According to an embodiment, the LLM 500 may be used as a draft model of the original LLM. The original LLM may generate a more accurate and refined output compared with an output of the LLM 500.

Hereinafter, the method of generating an output when the LLM 500 including the target transformer blocks receives tokens is described.

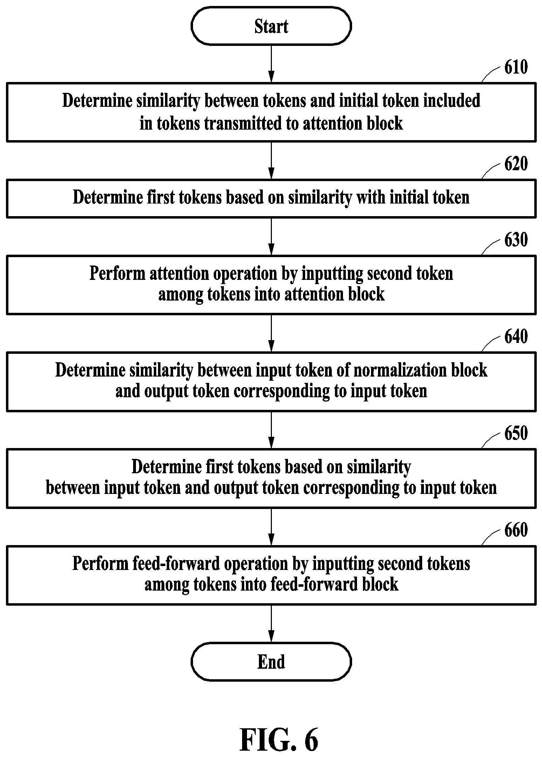

FIGS. 6 to 8 are diagrams each illustrating the operation of a target transformer block, according to an embodiment.

An LLM (e.g., the LLM 500 of FIG. 5) including the target transformer block may receive a data set. The data set may include tokens. The LLM may generate an output corresponding to the input tokens through inference with the tokens as an input.

Transformer blocks and the target transformer block included in the LLM may be sequentially connected. According to the sequence in which the transformer blocks and the target transformer block are connected, the tokens may sequentially pass the transformer blocks and the target transformer block.

If the tokens are input into the target transformer block, the electronic device 100 may determine first tokens at a pruning ratio at which an operation in a specific operation block is omitted from among the tokens, based on a similarity using the tokens. The electronic device 100 may input second tokens excluding the first tokens from among the tokens into the specific operation block and may have the first tokens bypass to the next operation block of the specific operation block. The operation of determining the first tokens for the specific operation block and inputting the second tokens into the specific operation block is further described below.

In the following embodiments, operations may be performed sequentially. However, the present disclosure is not limited thereto. For example, the order of the operations may be changed and at least two of the operations may be performed in parallel. The operations illustrated in FIG. 6 may be performed by at least one component of the electronic device 100. For example, the electronic device 100 may include a memory 120 configured to store instructions. The instructions, when executed individually and/or collectively by at least one processor 110, cause the electronic device 100 to perform the following operations.

In operation 610, the electronic device 100 may determine the similarity between tokens and an initial token included in the tokens transmitted to an attention block.

The specific operation block may include the attention block. The tokens transmitted to the attention block may include the initial token and the tokens.

The initial token is described above with reference to FIG. 3, and consequently, repeated descriptions thereof may be omitted for the sake of brevity. The electronic device 100 may determine the similarity between the initial token and the tokens. The similarity may be determined based on at least one of cosine similarity, Euclidean distance, or inner product.

In operation 620, the electronic device 100 may determine the first tokens based on the similarity with the initial token.

According to an embodiment, the electronic device 100 may determine bottom X tokens having a low similarity with the initial token, based on the similarity with the initial token, to be the first tokens.

According to an embodiment, the electronic device 100 may determine tokens having a similarity less than a threshold value, based on the similarity with the initial token, to be the first tokens.

According to an embodiment, the electronic device 100 may determine bottom Y tokens (where Y is a positive integer greater than zero (0)) having a low similarity corresponding to the pruning ratio from among the tokens, based on the similarity with the initial token, to be the first tokens.

However, the method of determining the first tokens is just an example, and the present disclosure is not limited thereto. In this regard, it may be apparent to those skilled in the art that there may be various methods for determining the tokens to be the first tokens with a relatively low similarity and the second tokens with a relatively high similarity, based on the similarity.

In operation 630, the electronic device 100 may perform an attention operation by inputting a second token among the tokens into the attention block.

The second tokens are described above with reference to FIG. 4, and consequently, repeated descriptions thereof may be omitted for the sake of brevity.

The electronic device 100 may determine the second tokens excluding the first tokens from the tokens. The first tokens may be tokens from which the attention operation is omitted, and the second tokens may be tokens on which the attention operation is performed. The electronic device 100 may input the second tokens into the attention block. The attention operation may be performed on the second tokens input into the attention block. The electronic device 100 may omit the attention operation from the first tokens. The electronic device 100 may not input the first tokens into the attention block, may bypass the attention block, and may transmit them to the next block of the attention block.

In operation 640, the electronic device 100 may determine the similarity between an input token of a normalization block and an output token corresponding to the input token.

The tokens that are input into or bypass the attention block according to operations 610 to 630 may be input into the normalization block. For ease of description, the tokens input into the normalization block may be referred to as input tokens, and the tokens output from the normalization block may be referred to as output tokens. For example, when token 3 having been input into the attention block is output from the attention block and is input into the normalization block arranged before a feed-forward block, for ease of description, token 3 may be referred to as input token 3. Similarly, an output generated as token 3 is input to the normalization block may be referred to as output token 3.

The electronic device 100 may determine the similarity between an input token of the normalization block and an output token corresponding to the input token. For example, the electronic device 100 may determine the similarity between input token 3 and output token 3 corresponding to input token 3.

The electronic device 100 may determine the similarity between an input token and an output token corresponding to the input token for every input token. For example, if there are 1000 input tokens, 1000 similarities may be determined because a similarity is determined for every input token. The similarity may be determined based on at least one of cosine similarity, Euclidean distance, or inner product.

In operation 650, the electronic device 100 may determine the first tokens based on the similarity between an input token and an output token corresponding to the input token.

The first tokens determined in operation 650 may indicate the tokens from which an operation is omitted, and the term "first" is used to distinguish them from the tokens (e.g., the second tokens) on which an operation is performed. The first tokens determined in operation 650 may not the same as the first tokens determined in operation 620. For example, even if determined to be a first token in operation 620, token 3 may not be determined to be a first token in operation 650.

According to an embodiment, the electronic device 100 may determine the bottom X tokens having a low similarity, based on the similarity between an input token and an output token, to be the first tokens.

According to an embodiment, the electronic device 100 may determine tokens having a similarity less than the threshold value, based on the similarity between an input token and an output token, to be the first tokens.

According to an embodiment, the electronic device 100 may determine the bottom Y tokens having a low similarity corresponding to the pruning ratio from among the tokens, based on the similarity between an input token and an output token, to be the first tokens.

However, the method of determining the first tokens is just an example, and the present disclosure is not limited thereto. In this regard, it may be apparent to those skilled in the art that there may be various methods for determining the tokens to be the first tokens with a relatively low similarity and the second tokens with a relatively high similarity, based on the similarity.

In operation 660, the electronic device 100 may perform a feed-forward operation by inputting a second token among the tokens into the feed-forward block.

The second tokens are described above with reference to FIG. 4, and consequently, repeated descriptions thereof may be omitted for the sake of brevity.

The electronic device 100 may determine the second tokens excluding the first tokens from the tokens transmitted from the normalization block to the feed-forward block. The first tokens may be tokens from which the feed-forward operation is omitted, and the second tokens may be tokens on which the feed-forward operation is performed. The electronic device 100 may input the second tokens into the feed-forward block. The feed-forward operation may be performed on the second tokens input into the feed-forward block. The electronic device 100 may omit the feed-forward operation from the first tokens. The electronic device 100 may not input the first tokens into the feed-forward block, may bypass the feed-forward block, and may transmit them to the next block.

Operations 610 to 660 may be performed whenever tokens pass the target transformer block.

Hereinafter, the foregoing operations are described with reference to the drawings.

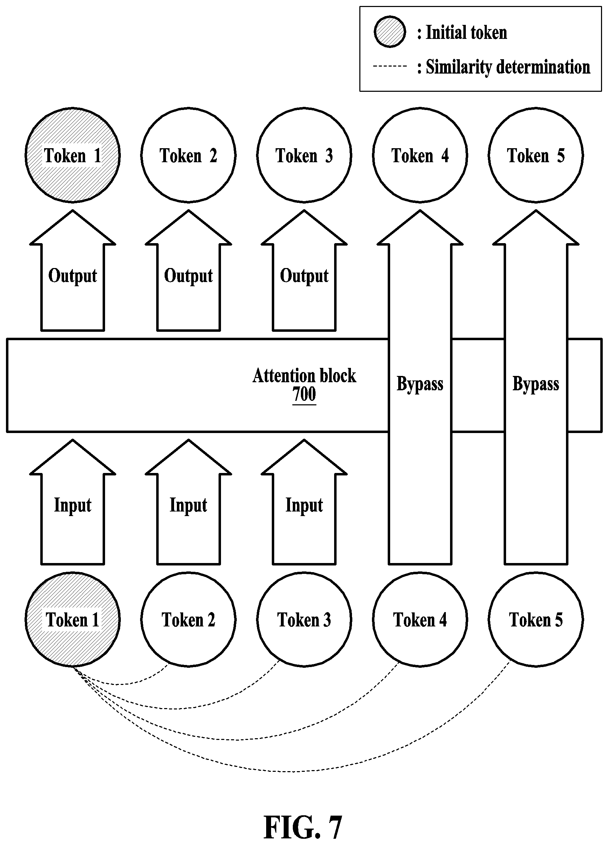

FIG. 7 illustrates a part of the target transformer block. For example, FIG. 7 illustrates an attention block 700 of the target transformer block. Hereinafter, for ease of description, it may be assumed that five (5) tokens are input into the target transformer block and the pruning ratio is 40 % (e.g., two (2) tokens).

The electronic device 100 may determine the similarity between the initial token and the tokens. For example, the electronic device 100 may determine the similarity between token 1 and the tokens (e.g., token 1 to token 5). The similarity between token 1 and token 2 may be the highest. For example, in the case of cosine similarity, the similarity between token 1 and token 2 may be the highest and may be assigned a value of one (1).

The electronic device 100 may determine the first tokens from which an attention operation is omitted from among the tokens at the pruning ratio. For example, token 4 having a low similarity and token 5 having a low similarity may be determined to be the first tokens. According to an embodiment, one or more layers that determine a similarity and determine the first tokens based on the similarity may be arranged before the attention block 700.

The electronic device 100 may determine the second tokens excluding the first tokens from the tokens. For example, token 1, token 2, and token 3 may be determined to be the second tokens.

The electronic device 100 may bypass the attention block 700 and may transmit the first tokens to the next operation block. The electronic device 100 may input the second tokens into the attention block 700. The attention operation may be performed on the second tokens in the attention block 700.

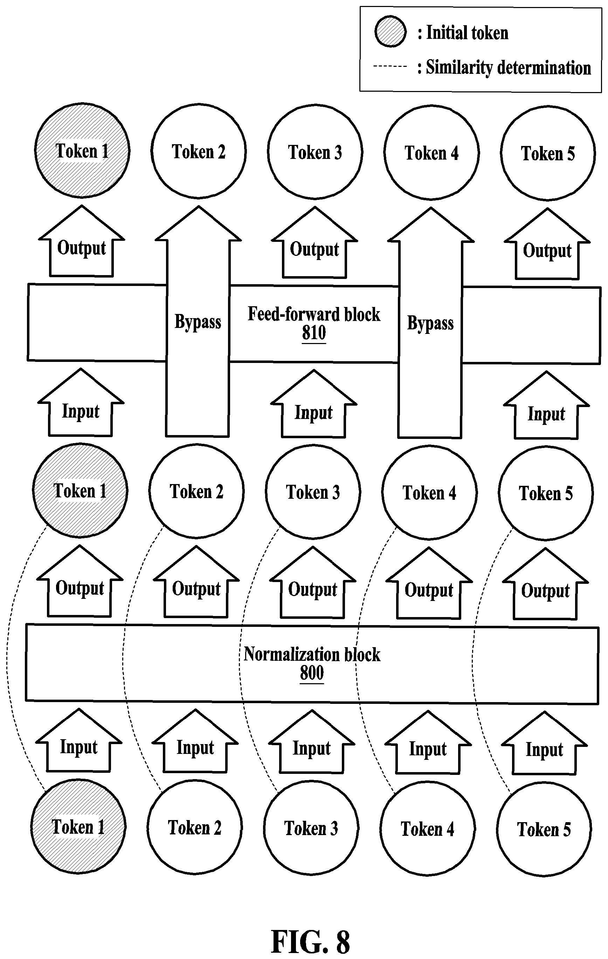

FIG. 8 illustrates a part of the target transformer block. For example, FIG. 8 illustrates a normalization block 800 of the target transformer block and a feed-forward block 810 of the target transformer block. The normalization block 800 may be arranged before the feed-forward block 810. The tokens that are input into the normalization block 800 may be tokens that are output from the attention block 700 of FIG. 7 or bypass the attention block 700.

The electronic device 100 may determine the similarity between an input token of the normalization block and an output token corresponding to the input token. For ease of description, the tokens input into the normalization block may be referred to as input tokens, and the tokens output from the normalization block may be referred to as output tokens. The electronic device 100 may determine the similarity between an input token and an output token corresponding to the input token for every input token. For example, the electronic device 100 may determine the similarity between token 1 input to the normalization block and token 1 output from the normalization block.

The electronic device 100 may determine the first tokens from which a feed-forward operation is omitted from among the tokens at the pruning ratio. For example, token 2 having a low similarity and token 4 having a low similarity may be determined to be the first tokens. According to an embodiment, the similarity between an input token of the normalization block and an output token corresponding to the input token may be determined, and one or more layers that determine the first tokens may be arranged between the normalization block 800 and the feed-forward block 810.

The electronic device 100 may determine the second tokens excluding the first tokens from the tokens. For example, token 1, token 3, and token 5 may be determined to be the second tokens.

The electronic device 100 may bypass the feed-forward block 810 and may transmit the first tokens to the next operation block. The electronic device 100 may input the second tokens into the feed-forward block 810. The feed-forward operation may be performed on the second tokens in the feed-forward block 810.

Comparison targets for determining the similarity may vary depending on the specific operation block. For example, in FIG. 7, if the specific operation block is the attention block 700, the similarity between the initial token input into the attention block 700 and the tokens may be determined. As another example, in FIG. 8, if the specific operation block is the feed-forward block 810, the similarity between an input token of the normalization block and an output token corresponding to the input token may be determined. The first tokens may be varyingly determined depending on the specific operation block.

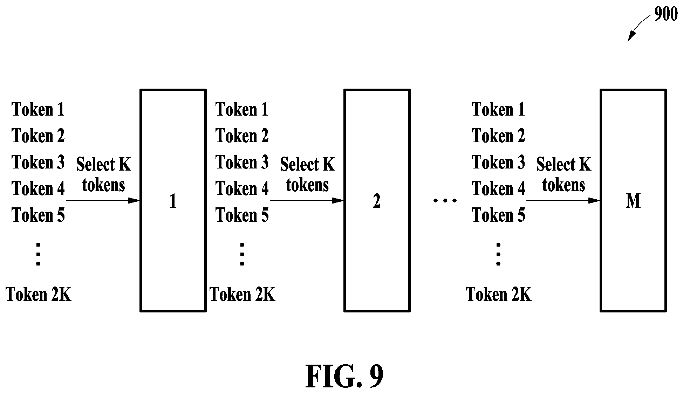

FIG. 9 is a diagram illustrating context lengthening, according to an embodiment.

Generally, an LLM 900 may have the specified number of tokens processible at once. The technology for increasing the number of tokens processible at once by the LLM 900 may be context lengthening. If the LLM 900 includes only a target transformer block that omits an operation from some of the tokens input for a specific operation, context lengthening may be performed.

An operation may be omitted in the target transformer block at a pruning ratio, and thus the LLM 900 may receive more tokens at the pruning ratio. For example, it may be assumed that the number of tokens processible at once by an original LLM used to determine an LLM 900 is K, all M transformer blocks included in the LLM 900 are target transformer blocks, and the pruning ratio is 50 %, where K and M are positive integers greater than zero (0).

The LLM 900 may determine first tokens from among the input tokens at the pruning ratio to omit an operation for the specific operation block and thus may process more tokens than the tokens processible at once by the original LLM. The LLM 900 may process more tokens inversely proportional to the pruning ratio than the tokens processible at once by the original LLM. For example, the LLM 900 may process more tokens twice (e.g., inversely proportional to 50 %) as many tokens processible at once by the original LLM.

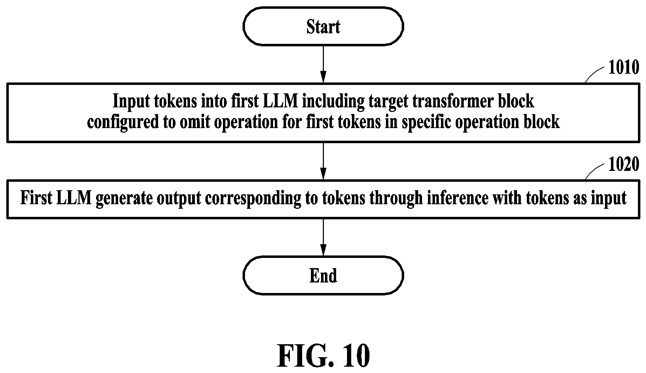

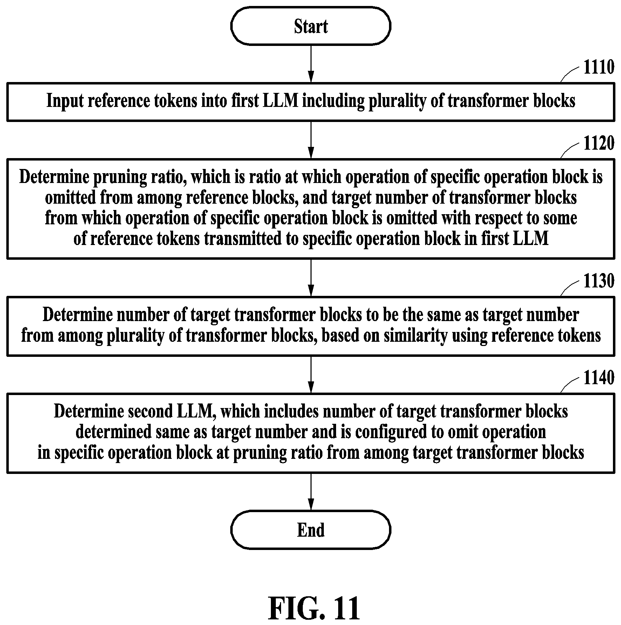

FIGS. 10 and 11 are diagrams each illustrating the operation of an electronic device, according to an embodiment.

In the following embodiments, operations may be performed sequentially. However, the present disclosure is not limited thereto. For example, the order of the operations may be changed and at least two of the operations may be performed in parallel. The operations illustrated in FIG. 10 may be performed by at least one component of the electronic device 100. For example, the electronic device 100 may include a memory 120 configured to store instructions. The instructions, when executed individually and/or collectively by at least one processor 110, cause the electronic device 100 to perform the following operations.

In operation 1010, the electronic device 100 may input tokens into a first LLM including a target transformer block configured to omit an operation for first tokens in a specific operation block.

In operation 1020, the electronic device 100 may cause the first LLM to generate an output corresponding to the tokens through inference with the tokens as an input.

Operations 1010 and 1020 are described with reference to FIGS. 1 to 9, and consequently, repeated descriptions thereof may be omitted for the sake of brevity.

In the following embodiments, operations may be performed sequentially. However, the present disclosure is not limited in this regard. For example, the order of the operations may be changed and at least two of the operations may be performed in parallel. The operations illustrated in FIG. 11 may be performed by at least one component of the electronic device 100. For example, the electronic device 100 may include a memory 120 configured to store instructions. The instructions, when executed individually and/or collectively by at least one processor 110, cause the electronic device 100 to perform the following operations.

In operation 1110, the electronic device 100 may input reference tokens into the first LLM including a plurality of transformer blocks.

In operation 1120, the electronic device 100 may determine a pruning ratio, which may be a ratio at which an operation of the specific operation block is omitted from among reference blocks, and the target number of transformer blocks from which an operation of the specific operation block is omitted with respect to some of the reference tokens transmitted to the specific operation block in the first LLM.

In operation 1130, the electronic device 100 may determine the number of target transformer blocks to be the same as the target number from among the plurality of transformer blocks, based on a similarity using the reference tokens.

In operation 1140, the electronic device 100 may determine a second LLM, which includes the number of target transformer blocks determined to be the same as the target number and is configured to omit an operation in the specific operation block at the pruning ratio from among the target transformer blocks.

Operations 1110 to 1140 are described with reference to FIGS. 1 to 9, and consequently, repeated descriptions thereof may be omitted for the sake of brevity.

According to an embodiment, there is provided a non-transitory computer-readable medium including one or more computer programs including instructions that execute inputting tokens into a first LLM including a target transformer block configured to omit an operation for first tokens in a specific operation block and the first LLM generating an output corresponding to the tokens through inference with the tokens as an input. The generating of an output corresponding to the tokens may include inputting the tokens into the target transformer block, determining the first tokens at a pruning ratio at which an operation in the specific operation block is omitted from among the tokens, based on a similarity using the tokens, inputting second tokens excluding the first tokens from among the tokens into the specific operation block, and having the first tokens bypass to the next operation block of the specific operation block.

The examples described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a specified manner. The processing device may run an operating system (OS) and one or more software applications that run on the OS. The processing unit also may access, store, manipulate, process, and generate data in response to execution of the software. For purpose of simplicity, the description of a processing unit is used as singular; however, one skilled in the art may appreciate that a processing unit may include multiple processing elements and multiple types of processing elements. For example, the processing unit may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing unit. The software also may be distributed over network-coupled computer systems so that the software is stored and executed in a distributed fashion. The software and data may be stored by one or more non-transitory computer-readable recording mediums.

The methods, according to the above-described examples, may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as compact disc-read-only memory (CD-ROM) discs, digital versatile discs (DVDs), and/or Blue-ray discs; magneto-optical media such as optical discs; and hardware devices that are specially configured to store and perform program instructions, such as read-only memory (ROM), random-access memory (RAM), flash memory (e.g., universal serial bus (USB) flash drives, memory cards, memory sticks, or the like), and the like. Examples of program instructions include both machine code, such as produced by a compiler, and files containing higher-level code that may be executed by the computer using an interpreter.

The above-described devices may act as one or more software modules in order to perform the operations of the above-described examples, or vice versa.

As described above, although the examples have been described with reference to the limited drawings, a person skilled in the art may apply various technical modifications and variations based thereon. Suitable results may be achieved if the described techniques are performed in a different order, and/or if components in a described system, architecture, device, or circuit are combined in a different manner, and/or replaced or supplemented by other components or their equivalents.

Accordingly, other implementations are within the scope of the following claims.

## Claims

1. An operating method of an electronic device, the operating method comprising:
inputting a plurality of tokens into a first language model (LM) trained to omit performing an operation of a first operation block on first tokens of the plurality of tokens; and
generating, by the first LM, an output corresponding to the plurality of tokens by performing inference on the plurality of tokens,
wherein the generating of the output corresponding to the plurality of tokens comprises:
inputting the plurality of tokens into a target transformer block of the first LM;
determining the first tokens at a pruning ratio at which the operation of the first operation block is omitted, based on a similarity of the plurality of tokens;
inputting, into the first operation block, second tokens of the plurality of tokens excluding the first tokens; and
bypassing the first tokens to a next operation block of the first operation block.

2. The operating method of claim 1, wherein the first operation block comprises an attention block of the target transformer block, and
wherein the determining of the first tokens comprises:
determining the first tokens based on a similarity between the plurality of tokens and an initial token comprised in the plurality of tokens transmitted to the attention block.

3. The operating method of claim 2, wherein the inputting of the second tokens into the first operation block comprises:
inputting the second tokens determined based on the similarity between the plurality of tokens and the initial token.

4. The operating method of any one of the previous claims, wherein the first operation block comprises a feed-forward block of the target transformer block, and
wherein the determining the first tokens comprises:
determining the first tokens based on a similarity between an input token of a normalization block disposed before the feed-forward block and an output token of the normalization block corresponding to the input token;
wherein preferably the inputting of the second tokens into the first operation block comprises:
inputting the second tokens determined based on the similarity between the input token and the output token into the feed-forward block.

5. The operating method of any one of the previous claims, further comprising:
determining a similarity between a plurality of reference tokens by inputting the plurality of reference tokens into a second LM comprising a plurality of transformer blocks; and
determining the first LM by selecting the target transformer block from among the plurality of transformer blocks based on the similarity between the plurality of reference tokens.

6. The operating method of claim 5, wherein the determining of the first LM comprises:
inputting the plurality of reference tokens into the second LM;
determining the pruning ratio and a target number of transformer blocks from which the operation of the first operation block is omitted based on at least one reference token of the plurality of reference tokens inputted into the first operation block; and
determining a number of transformer blocks from among the plurality of transformer blocks as target transformer blocks, based on the similarity between the plurality of reference tokens,
wherein the pruning ratio is a ratio of one or more reference tokens of the plurality of reference tokens from which the operation of the first operation block is omitted, and
wherein the number of transformer blocks is equal to the target number of transformer blocks.

7. The operating method of claim 6, wherein the determining of the number of transformer blocks comprises:
determining whether the number of transformer blocks has reached the target number of transformer blocks; and
based on determining that the number of transformer blocks has not reached the target number of transformer blocks, determining an additional target transformer block from among the plurality of transformer blocks,
wherein the determining of the additional target transformer block comprises:
determining a transformer block from among remaining transformer blocks of the plurality of transformer blocks having a least impact on an inference performance of the second LM as the additional target transformer block, based on an operation of at least one reference token being omitted at the pruning ratio in the first operation block among the remaining transformer blocks.

8. The operating method of any one of the previous claims, further comprising:
determining the similarity of the plurality of tokens based on at least one of a cosine similarity, an Euclidean distance, or an inner product; and/or
determining the pruning ratio based on a hardware resource of a device configured to execute the first LM; and/or
determining the first LM based on a second LM,
wherein the first LM is used as a draft model of the second LM.

9. The operating method of any one of the previous claims, wherein the generating of the output corresponding to the plurality of tokens further comprises:
determining the first LM based on a second LM; and
based on the first LM comprising only the target transformer block, processing a first number of tokens of the plurality of tokens greater than a second number of tokens processible at once by the second LM.

10. The operating method of any one of the previous claims, wherein the determining the first tokens comprises:
determining the similarity of the plurality of tokens based on one or more comparison corresponding to the first operation block; and
determining the first tokens based on the similarity of the plurality of tokens and the first operation block.

11. An electronic device, comprising:
one or more processors comprising processing circuitry; and
memory storing instructions,
wherein the instructions, when executed by the one or more processors individually or collectively, cause the electronic device to:
input a plurality of tokens into a first language model (LM) comprising a target transformer block configured to omit an operation of a first operation block on first tokens of the plurality of tokens; and
generate, using the first LM, an output corresponding to the plurality of tokens by performing inference on the plurality of tokens, and
wherein the instructions, when executed by the one or more processors individually or collectively, further cause the electronic device, when generating the output corresponding to the plurality of tokens, to:
input the plurality of tokens into the target transformer block;
determine the first tokens at a pruning ratio at which the operation of the first operation block is omitted, based on a similarity of the plurality of tokens;
input, into the first operation block, second tokens of the plurality of tokens excluding the first tokens; and
bypass the first tokens to the a operation block of the first operation block.

12. The electronic device of claim 11, wherein the first operation block comprises an attention block of the target transformer block, and
wherein the instructions, when executed by the one or more processors individually or collectively, further cause the electronic device to:
determine the first tokens based on a similarity between the plurality of tokens and an initial token comprised in the plurality of tokens transmitted to the attention block.

13. The electronic device of claim 12, wherein the instructions, when executed by the one or more processors individually or collectively, further cause the electronic device to:
input the second tokens determined based on the similarity between the plurality of tokens and the initial token.

14. The electronic device of any one of claims 11-13, wherein the first operation block comprises a feed-forward block of the target transformer block, and
wherein the instructions, when executed by the one or more processors individually or collectively, further cause the electronic device to:
determine the first tokens based on a similarity between an input token of a normalization block disposed before the feed-forward block and an output token of the normalization block corresponding to the input token;
wherein preferably the instructions, when executed by the one or more processors individually or collectively, further cause the electronic device to:
input the second tokens determined based on the similarity between the input token and the output token into the feed-forward block.

15. The electronic device of any one of claims 11-14, wherein the instructions, when executed by the one or more processors individually or collectively, further cause the electronic device to:
determine a similarity between a plurality of reference tokens by inputting the plurality of reference tokens into a second LM comprising a plurality of transformer blocks; and
determine the first LM by selecting the target transformer block from among the plurality of transformer blocks based on the similarity between the plurality of reference tokens.
